# EUROPÄISCHE PATENTSCHRIFT

(11) **EP 3 470 641 B1**
(45) Veröffentlichungstag und Bekanntmachung des Hinweises auf die Patenterteilung: **21.07.2021**
(21) Anmeldenummer: 18195459.5
(22) Anmeldetag: 19.09.2018
(51) Int. Cl.: F01N 3/20, F01N 13/16

(54) **ABGASANLAGE**
EXHAUST SYSTEM
SYSTÈME D'ÉCHAPPEMENT

(30) Priorität: 10.10.2017 DE 102017123447
(43) Veröffentlichungstag der Anmeldung: 17.04.2019
(73) Patentinhaber: Eberspächer Exhaust Technology GmbH & Co. KG, 66539 Neunkirchen (DE)
(72) Erfinder: Gaiser, Gerd, 72768 Reutlingen (DE); Weller, Bernd, 73568 Durlangen (DE)
(74) Vertreter: Ruttensperger Lachnit Trossin Gomoll

(56) Entgegenhaltungen:
- WO-A1-2013/098306
- DE-A1-102010 039 074
- DE-A1-102014 018 852
- JP-B2- 6 081 848

## Beschreibung

Die vorliegende Erfindung betrifft eine Abgasanlage für eine Brennkraftmaschine, die beispielsweise in einem Fahrzeug eingesetzt werden kann, um das von einer Brennkraftmaschine ausgestoßene Abgas zur Umgebung hin abzugeben.

Um den Schadstoffgehalt von aus einer Brennkraftmaschine, insbesondere DieselBrennkraftmaschine, ausgestoßenem Abgas zu mindern, ist es bekannt, dem Abgas ein Reaktionsmittel, wie zum Beispiel eine Harnstoff/Wasser-Lösung, beizumengen, um in einer in einer Katalysatoranordnung durchgeführten selektiven katalytischen Reduktion den Stickoxidanteil im Abgas zu mindern. Das dem Abgas zugeführte Reaktionsmittel wird vor Durchführung der selektiven katalytischen Reduktion zersetzt, insbesondere um für diese Reaktion erforderlichen Ammoniak bereitzustellen. Insbesondere bei ungünstigen thermischen Bedingungen, also beispielsweise bei niedrigen Umgebungstemperaturen oder niedrigen Abgastemperaturen, oder/und hohen Dosierraten für das Reaktionsmittel besteht die Gefahr, dass diese Zersetzung unvollständig bzw. unter Bildung von Zwischenprodukten abläuft, was zur Entstehung ungewünschter Ablagerungen an Oberflächen vom das Abgas bzw. das Reaktionsmittel führenden Komponenten führen kann.

Aus der JP 6 081848 B2 ist eine Abgasanlage gemäß dem Oberbegriff des Anspruchs 1 bekannt.

Es ist die Aufgabe der vorliegenden Erfindung, eine Abgasanlage bereitzustellen, bei welcher die Gefahr der Entstehung von Ablagerungen an abgasführenden Komponenten gemindert ist.

Erfindungsgemäß wird diese Aufgabe gelöst durch eine Abgasanlage für eine Brennkraftmaschine, insbesondere in einem Fahrzeug, gemäß Anspruch 1. Diese Abgasanlage umfasst einen Abgasströmungskanal, eine Reaktionsmittelabgabeanordnung zur Abgabe von Reaktionsmittel in den Abgasströmungskanal und eine Katalysatoranordnung stromabwärts der Reaktionsmittelabgabeanordnung, wobei bei wenigstens einer im Reaktionsmittelströmungsweg positionierten oder/und diesen begrenzenden abgasführenden Komponente wenigstens ein Teil einer Komponentenoberfläche durch hydrophiles Material bereitgestellt ist, oder/und wobei bei wenigstens einer im Reaktionsmittelströmungsweg positionierten abgasführenden Komponente wenigstens ein Teil einer Komponentenoberfläche durch hydrophobes Material bereitgestellt ist.

Durch das Bereitstellen von Oberflächen mit einem Material, das durch seinen hydrophilen Charakter die Benetzung der Oberfläche und somit eine Verteilung des darauf auftreffenden Reaktionsmittels zum Bilden eines dünnen Films unterstützt, kann eine verstärkte Verdampfung des Reaktionsmittels, insbesondere des darin enthaltenen Wassers und somit auch eine bessere Zersetzung des Reaktionsmittels erreicht werden. In Bereichen, welche für eine derartige Unterstützung der Verdampfung bzw. Zersetzung aufgrund der strömungstechnischen Verhältnisse weniger geeignet sind, kann durch das Bereitstellen einer Oberfläche mit hydrophobem Charakter die Ansammlung von Reaktionsmittel und somit die Entstehung von Ablagerungen verhindert werden.

Beispielsweise kann wenigstens eine abgasführende Komponente ein Rohr umfassen, wobei wenigstens ein Teil einer Rohrinnenoberfläche durch hydrophiles Material bereitgestellt ist.

Um die Durchmischung des Reaktionsmittels mit dem Abgas zu unterstützen, umfasst wenigstens eine abgasführende Komponente einen Mischer mit einer Mehrzahl von Leitschaufeln.

Bei einem derartigen Mischer wird die Verdampfung bzw. Zersetzung des Reaktionsmittels dadurch in besonders vorteilhafter Weise unterstützt, dass wenigstens ein Teil einer bezüglich des Abgasstroms luvseitigen Oberfläche wenigstens einer, vorzugsweise jeder Leitschaufel durch hydrophiles Materialbereitgestellt ist. Dabei ist darauf hinzuweisen, dass eine luvseitige Oberfläche im Sinne der vorliegenden Erfindung eine dem Abgasstrom bzw. dem Reaktionsmittelstrom ausgesetzte, diesem also grundsätzlich zugewandte Oberfläche ist. Durch das Bereitstellen einer derartigen hydrophilen Charakteristik wird das auf eine derartige luvwärts orientierte Oberfläche auftreffende Reaktionsmittel zum Erzeugen eines dünnen Films verteilt und somit an einer derartigen Oberfläche leicht verdampft bzw. zersetzt.

Weiter ist vorgesehen, dass wenigstens ein Teil einer bezüglich des Abgasstroms leeseitigen Oberfläche der wenigstens einen Leitschaufel durch hydrophobes Material bereitgestellt ist. Im Sinne der vorliegenden Erfindung ist eine derartige leeseitige Oberfläche vom Abgasstrom bzw. Reaktionsmittelstrom abgewandt orientiert, bildet also beispielsweise die in Richtung stromabwärts orientierte Seite einer Leitschaufel eines Mischers. Da im Bereich derartiger Oberflächen Strömungstoträume entstehen können, soll eine Ansammlung von Reaktionsmittel dort verhindert werden, insbesondere um das Entstehen von Ablagerungen zu unterbinden.

Erfindungsgemäß ist jede Leitschaufel bezüglich einer Abgas-Hauptströmungsrichtung angestellt. Jede Leitschaufel weist eine Anströmkante sowie eine bezüglich der Anströmkante stromabwärts positionierte Abströmkante auf.

Bei wenigstens einer, vorzugsweise jeder Leitschaufel kann wenigstens ein Teil der Abströmkante, vorzugsweise die gesamte Abströmkante, durch hydrophobes Material bereitgestellt sein. Somit kann dafür gesorgt werden, dass an einer derartigen Abströmkante keine tropfenartigen Ansammlungen von Reaktionsmittel entstehen können.

Bei der wenigstens einen Leitschaufel ist die gesamte Anströmkante durch eine hydrophobe Materialbeschichtung bereitgestellt. Eine derartige hydropobe Charakteristik ist besonders dann von Vorteil, wenn eine Flächennormale einer luvseitigen Oberfläche der wenigstens einen Leitschaufel mit mit hydrophobem Material beschichteter Anströmkante bezüglich einer Abgas-Hauptströmungsrichtung einen Winkel von weniger als 45° aufweist.

Gemäß einer alternativen Ausgestaltung ist bei der wenigstens einen Leitschaufel die gesamte Anströmkante durch eine hydrophiles Materialbeschichtung bereitgestellt, wobei eine derartige hydrophile Charakteristik im Bereich der Anströmkante sich dann besonders vorteilhaft auswirkt, wenn eine Flächennormale einer luvseitigen Oberfläche der wenigstens einen Leitschaufel mit mit hydrophobem Material beschichteter Anströmkante bezüglich einer Abgas-Hauptströmungsrichtung einen Winkel von wenigstens 45° aufweist.

Um bei hinsichtlich der Strömungsführung komplex gestalteten Abgasanlagen die Entstehung von Ablagerungen weiter zu verhindern und die Verdampfung bzw. Zersetzung von Reaktionsmittel zu unterstützen, wird weiter vorgeschlagen, dass in einem Krümmungsbereich des Abgasströmungskanals eine den Abgasströmungskanal begrenzende Oberfläche einer abgasführenden Komponente in einem Krümmungsinnenbereich durch hydrophobes Material bereitgestellt ist, oder/und dass in einem Krümmungsbereich des Abgasströmungskanals eine den Abgasströmungskanal begrenzende Oberfläche einer abgasführenden Komponente in einem Krümmungsaußenbereich durch hydrophiles Material bereitgestellt ist.

Die Reaktionsmittelabgabeanordnung kann im Bereich eines Reaktionsmittelabgabestutzens angeordnet sein. Da im Inneren eines derartigen Stutzens Strömungstoträume entstehen können, welche anfällig für das Entstehen von Reaktionsmittelablagerungen sind, wird weiter vorgeschlagen, dass eine Innenoberfläche des Reaktionsmittelabgabestutzens wenigstens bereichsweise durch hydrophobes Material bereitgestellt ist.

Grundsätzlich sind Oberflächenbereiche, welche dem Abgasstrom bzw. dem Reaktionsmittelstrom nicht direkt ausgesetzt sind, für das Entstehen von Ablagerungen anfällig. Es wird daher gemäß einem weiteren Prinzip der vorliegenden Erfindung vorgeschlagen, dass in wenigstens einem Bereich einer den Abgasströmungskanal begrenzenden Oberfläche mit in Richtung einer Abgas-Hauptströmungsrichtung geneigter oder dazu paralleler und gleich gerichteter Flächennormale die Oberfläche mit hydrophobem Material bereitgestellt ist.

Die vorliegende Erfindung wird nachfolgend mit Bezug auf die beiliegenden Figuren beschrieben. Es zeigt:
- Fig. 1: in prinzipartiger Darstellung einen Teilbereich einer Abgasanlage;
- Fig. 2: einen eine abgasführende Komponente einer Abgasanlage bereitstellenden Mischer in perspektivischer Ansicht;
- Fig. 3: einen Bereich einer Leitschaufel des Mischers der Fig. 2;
- Fig. 4: eine Darstellung eines Teilbereichs einer Abgasanlage;
- Fig. 5: eine weitere Darstellung eines Teilbereichs einer Abgasanlage.

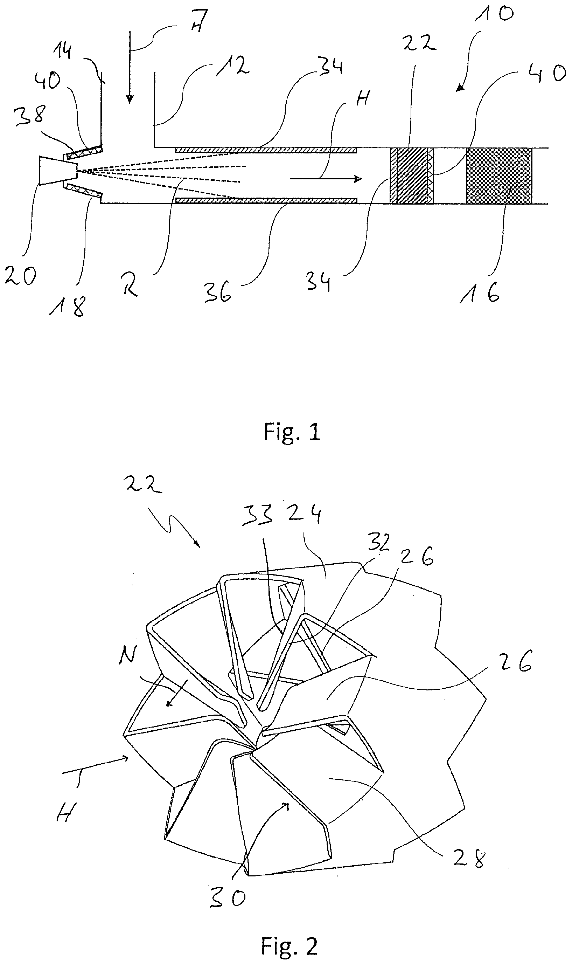

Die Fig. 1 zeigt einen Teil einer allgemein mit 10 bezeichneten Abgasanlage einer Brennkraftmaschine. Das von einer Brennkraftmaschine ausgestoßene Abgas A strömt in einem in einem Rohr 12 bereitgestellten Abgaskanal 14 in Richtung auf eine Katalysatoranordnung 16, beispielsweise SCR-Katalysatoranordnung, zu. Das Rohr 12 kann aus einem Teil bestehen oder aus mehreren Teilen zusammengesetzt sein. In dem Rohr 12 strömt das Abgas A entlang einer Abgas-Hauptströmungsrichtung H, welche im Wesentlichen auch der Längserstreckungsrichtung des Rohrs 12 in einem jeweiligen ggf. auch gekrümmt ausgebildeten Rohrabschnitt entsprechen kann.

Im Bereich eines am Rohr 12 vorgesehenen Reaktionsmittelabgabestutzens 18 ist eine allgemein auch als Injektor bezeichnete Reaktionsmittelabgabeanordnung 20 vorgesehen. Die Reaktionsmittelabgabeanordnung 20 gibt ein Reaktionsmittel R in Form eines Sprühkegels in den Abgasströmungskanal 14, d. h. in das Rohr 12, ab. Im Rohr 12 bzw. im Abgasströmungskanal 14 durchmischt sich das Reaktionsmittel R mit dem Abgas A, wobei das Reaktionsmittel R zersetzt wird bzw. Wasser aus dem Reaktionsmittel R abdampft, um für die an der Katalysatoranordnung 16 durchzuführende selektive katalytische Reduktion erforderlichen Ammoniak bereitzustellen.

Im Strömungsweg zwischen der Reaktionsmittelabgabeanordnung 20 und der Katalysatoranordnung 16 ist ein Mischer 22 vorgesehen. Der Mischer 22, welcher ebenso wie das Rohr 12 bzw. auch der Reaktionsmittelabgabestutzen 18 grundsätzlich eine abgasführende Komponente bereitstellt, kann so wie in Fig. 2 dargestellt aufgebaut sein. Der Mischer 22 kann einen ringförmigen Körper 24 aufweisen, von welchem in einem stromaufwärtigen Endbereich sowie auch einem stromabwärtigen Endbereich jeweilige Leitschaufeln 26 nach radial innen vorstehen. Die Leitschaufeln 26 sind bezüglich der im Bereich des Mischers 22 vorhandenen Abgas-Hauptströmungsrichtung H angestellt und weisen somit eine dem Abgasstrom bzw. auch dem Reaktionsmittelstrom ausgesetzte luvseitige Oberfläche 28 sowie eine jeweils die Rückseite der Schaufeln 26 bildende und somit dem Abgasstrom bzw. Reaktionsmittelstrom nicht direkt ausgesetzte leeseitige Oberfläche 30 auf. Aufgrund der Anstellung der Leitschaufeln 26 bezüglich der Abgas-Hauptströmungsrichtung H ist eine Flächennormale N der luvseitigen Oberflächen 28 bezüglich der Abgas-Hauptströmungsrichtung H angewinkelt und dieser entgegengerichtet, was bedeutet, dass die Flächennormale N bei Vektorzerlegung eine zur Abgas-Hauptströmungsrichtung H parallele und dieser entgegengerichtete Vektorkomponente aufweist. Jede der in dieser Weise angestellten Leitschaufeln 26 weist aufgrund der Anstellung eine Anströmkante 32 sowie eine bezüglich der Abgas-Hauptströmungsrichtung H stromabwärts und in Umfangsrichtung versetzt zur jeweiligen Anströmkante 32 positionierte Abströmkante 33 auf.

Das von der Reaktionsmittelabgabeanordnung 20 abgegebene Reaktionsmittel R kommt im Reaktionsmittelströmungsweg zwischen der Reaktionsmittelabgabeanordnung 20 und der Katalysatoranordnung 16 in Kontakt mit den verschiedenen abgasführenden Komponenten der Abgasanlage 10, also insbesondere dem Rohr 12, dem Reaktionsmittelabgabestutzen 18 und dem Mischer 22. Bei diesem Kontakt des im Allgemeinen durch eine Harnstoff/Wasser-Lösung, alternativ als Denoxium oder dgl., bereitgestellten Reaktionsmittels R mit den vergleichsweise warmen abgasführenden Komponenten wird einerseits das im Reaktionsmittel R enthaltene Wasser verdampft, andererseits wird der Harnstoff zersetzt, um für die selektive katalytische Reduktion erforderlichen Ammoniak bereitzustellen. Um diese Verdampfung bzw. Zersetzung zu unterstützen und das Entstehen von Ablagerungen, insbesondere von bei der Zersetzung des Harnstoffs entstehenden Zwischenprodukten, an abgasführenden Komponenten zu verhindern, sind gemäß den Prinzipien der vorliegenden Erfindung die in Kontakt mit dem Reaktionsmittel tretenden Oberflächen zumindest eines Teils der abgasführenden Komponenten mit hydrophiler oder hydrophober Charakteristik ausgebildet. So ist beispielsweise in einem zwischen der Reaktionsmittelabgabeanordnung 20 und dem Mischer 22 sich beispielsweise im Wesentlichen geradlinig erstreckenden Abschnitt des Rohrs 12 hydrophiles Material 34 durch eine Materialbeschichtung 36 des Rohrs 12 an seiner Innenseite vorgesehen. Die Materialbeschichtung 36 aus hydrophilem Material 34 ist im Wesentlichen im gesamten zwischen der Reaktionsmittelabgabeanordnung 20 und dem Mischer 22 sich erstreckenden Längenbereich des Rohrs 12 vorgesehen, so dass gewährleistet ist, dass das in Form eines Sprühkegels aus der Reaktionsmittelabgabeanordnung 20 austretende Reaktionsmittel R im Wesentlichen nur mit Oberflächenbereichen des Rohrs 12 in Kontakt treten kann, die mit der Materialbeschichtung 36 überzogen sind. Auch die in Richtung stromaufwärts orientierten, luvseitigen Oberflächen 28 der Leitschaufeln 26 des Mischer 22 können zumindest teilweise mit einer derartigen Materialbeschichtung aus hydrophilem Material überzogen sein.

Durch das Bereitstellen einer derartigen hydrophilen Charakteristik in Oberflächenbereichen von abgasführenden Komponenten wird gewährleistet, dass das auf diese Oberflächenbereiche auftreffende Reaktionsmittel zu einem dünnen Film verteilt wird, wodurch einerseits die Abdampfung von Wasser und andererseits die Zersetzung des Harnstoffs unterstützt wird. Lokale Ansammlungen werden vermieden. Die sehr schnelle Verteilung des flüssigen Reaktionsmittels R auf einer vergleichsweise großen Oberfläche mit hydrophiler Oberflächencharakteristik unterstützt die Verdampfung und Zersetzung des Reaktionsmittels bereits bei vergleichsweise niedrigen Temperaturen bzw. auch bei vergleichsweise großen Dosiermengen des Reaktionsmittels R. Dies wiederum führt zu einer deutlich effizienteren Nutzbarkeit des Reaktionsmittels R für die in der Katalysatoranordnung 16 durchzuführende selektive katalytische Reduktion.

In Bereichen, in welchen aufgrund der strömungstechnischen Verhältnisse eine Ansammlung von Reaktionsmittel vermieden werden soll, kann gemäß den Prinzipien der vorliegenden Erfindung eine hydrophobe Oberflächencharakteristik bereitgestellt werden. So kann beispielsweise der Reaktionsmittelabgabestutzen 18 an seiner Innenseite mit einer Materialbeschichtung 38 aus hydrophobem Material 40 überzogen sein. Der Reaktionsmittelabgabestutzen 18 bildet zwar grundsätzlich ein für Abgas A zugängliches Volumen, stellt jedoch im Wesentlichen einen Strömungstotraum bereit, so dass in diesen Bereich gelangendes Reaktionsmittel nur schwer wieder abgetragen werden kann. Dies kann durch das Bereitstellen einer hydrophoben Oberflächencharakteristik unterstützt werden. Das Entstehen von Ablagerungen im Bereich des Reaktionsmittelabgabestutzens 18 kann weiter dadurch vermieden werden, dass dieser Stutzen beispielsweise durch einen den Strom des Reaktionsmittels R umgebenden Mantelstrom gespült wird, der beispielsweise im Wesentlichen durch aus dem Abgasstrom abgezweigtes Abgas gebildet sein kann.

Auch können beispielsweise die der Abgasströmung nicht direkt ausgesetzten, leeseitigen Oberflächen 30 der Leitschaufeln 26 wenigstens teilweise mit derartigem hydrophobem Material 40 überzogen sein. Da derartige dem Abgasstrom nicht direkt ausgesetzte Oberflächen zu einer Verdampfung und Zersetzung des Reaktionsmittels im Wesentlichen nicht beitragen können, würde eine längere Verweilzeit des Reaktionsmittels R an diesen Oberflächen das Entstehen von Zwischenprodukten und unerwünschten Ablagerungen unterstützen. Dies wird durch das Bereitstellen einer hydrophoben Oberflächencharakteristik vermieden.

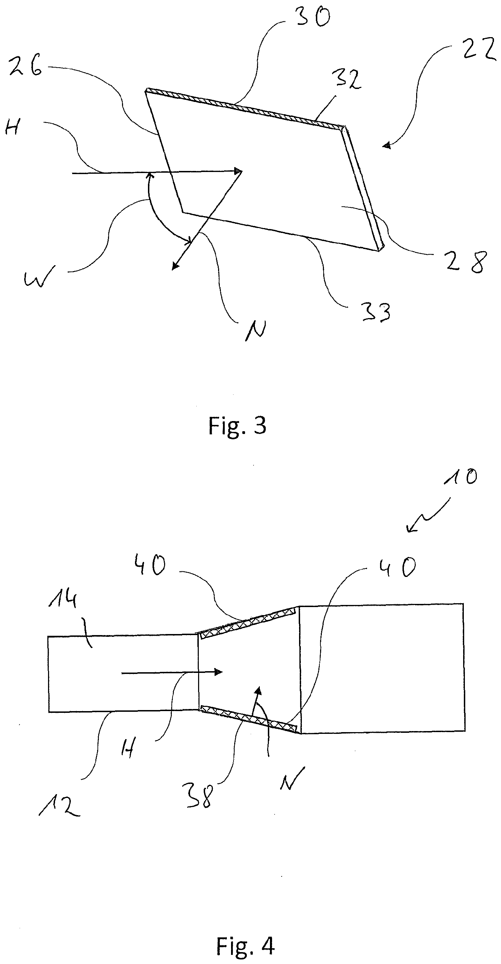

Weiter sind gemäß den Prinzipien der vorliegenden Erfindung die Leitschaufeln 26 auch im Bereich ihrer Anströmkanten 32 bzw. ihrer Abströmkanten 33 mit derartiger hydrophiler bzw. hydrophober Oberflächencharakteristik bereitgestellt. So können grundsätzlich beispielsweise die von Abgas A bzw. Reaktionsmittel R nicht direkt anströmbaren Abströmkanten 33 mit hydrophober Oberflächencharakteristik bereitgestellt werden, beispielsweise indem dort die in Fig. 1 in prinzipartiger Darstellung angedeutete Materialbeschichtung mit hydrophobem Material 40 vorgesehen wird. Die dem Abgasstrom direkt ausgesetzten Anströmkanten 32 sind abhängig vom Anstellwinkel der Leitschaufeln 26, mit hydrophiler oder hydrophober Oberflächencharakteristik bereitgestellt. Sind die Leitschaufeln 26 derart angestellt, dass ein in Fig. 3 veranschaulichter Winkel W zwischen einer von der luvseitigen Oberfläche 28 ausgehenden Flächennormalen N und der auf die entsprechende Oberfläche zu gerichteten Abgas-Hauptströmungsrichtung H wenigstens 45° beträgt, ist an der Anströmkante 32 die in Fig. 3 prinzipartig dargestellte Materialbeschichtung mit hydrophilem Material 34 vorgesehen. Ist dieser Winkel W kleiner, insbesondere kleiner als 45°, ist im Bereich der Anströmkanten 32 durch Aufbringung einer Materialbeschichtung mit hydrophobem Material eine hydrophobe Oberflächencharakteristik vorgesehen, um eine Materialansammlung in diesem Bereich zu vermeiden. Da im Allgemeinen derartige Leitschaufeln 26 gekrümmt oder/und in sich verdreht sein können, kann der Winkel W über die luvseitige Oberfläche 28 einer jeweiligen Leitschaufel 26 variieren. Das vorangehend angegebene Winkelkriterium für das Vorsehen einer hydrophilen oder einer hydrophoben Materiallage auf einer jeweiligen Anströmkante 32 kann beispielsweise dann als erfüllt betrachtet werden, wenn der Winkel W im größeren Teil der Oberfläche, beispielsweise wenigstens in der Hälfte der luvseitigen Oberfläche 28, das entsprechende Kriterium erfüllt. Ferner ist darauf hinzuweisen, dass der Grenzwinkel, welcher im vorangehend angegebenen Beispiel bei etwa 45° liegt, abhängig vom Aufbau eines Mischers variieren kann. Beispielsweise kann dieser Grenzwinkel im Bereich von 40° bis 50° liegen, so dass beispielsweise bei einem Winkel von kleiner als 42° eine hydrophobe Oberflächencharakteristik an einer jeweiligen Anströmkante 32 bereitgestellt wird, während dann, wenn der Winkel größer oder gleich 42° ist, eine hydrophile Oberflächencharakteristik bereitgestellt werden kann.

Ein weiteres Beispiel einer Materialbeschichtung 38 mit hydrophobem Material ist in Fig. 4 veranschaulicht. Die Fig. 4 zeigt einen Abschnitt einer Abgasanlage 10, in welchem eine beispielsweise kegelstumpfartige Erweiterung des Durchmessers des Rohrs 12 vorgesehen ist. Es ist darauf hinzuweisen, dass selbstverständlich der in Fig. 4 dargestellte Abschnitt des Rohrs 12 ein Abschnitt ist, der stromabwärts der Reaktionsmittelabgabeanordnung 20 und stromaufwärts der Katalysatoranordnung 16 positioniert ist. Man erkennt grundsätzlich in Fig. 4, dass in demjenigen Bereich, in welchem der Durchmesser des Rohrs 12 in Strömungsrichtung zunimmt, eine Flächennormale N der Oberfläche bezüglich der Abgas-Hauptströmungsrichtung H in diesem Bereich angewinkelt ist, insbesondere in Richtung der Abgas-Hauptströmungsrichtung gerichtet ist, was bedeutet, dass bei Vektorzerlegung der Flächennormale N eine zur Abgas-Hauptströmungsrichtung H parallele und zu dieser gleichgerichtete Vektorkomponente entsteht. Dies bedeutet, dass dieser Oberflächenbereich dem Abgasstrom bzw. dem Reaktionsmittelstrom nicht direkt ausgesetzt ist und somit grundsätzlich die Gefahr der Entstehung von Ablagerungen involviert. Um dies zu vermeiden, ist vermittels der Materialbeschichtung 38 mit hydrophobem Material 40 dafür gesorgt dass das in diesem Bereich auf der Innenseite des Rohrs 12 sich niederschlagende Reaktionsmittel vergleichsweise schnell wieder abgeführt wird und somit die Gefahr der Entstehung von Ablagerungen in einem weniger effizient durchströmten Volumen gemindert ist.

Dieses Prinzip kann erfindungsgemäß erweitert werden auf alle derartigen Oberflächenbereiche, deren Flächennormale, so wie in Fig. 4 angedeutet, in der Abgas-Hauptströmungsrichtung geneigt ist oder zu dieser parallel und gleichgerichtet ist. Derartige Bereiche können auch an Schweißnähten oder beispielsweise im stromabwärtigen Endbereich des Mischers 22, insbesondere des ringartigen Körpers 24 desselben, entstehen. In all diesen oder zumindest einigen derartigen Bereichen ist das Vorsehen einer hydrophoben Oberflächencharakteristik zum Vermeiden von Ablagerungen besonders vorteilhaft. Derartige hinsichtlich der Entstehung von Ablagerungen kritische Oberflächenbereiche bzw. Volumenbereiche können beispielsweise in Laborversuchen oder Modellrechnungen ermittelt werden, um dann in diesen oder zumindest einigen derartigen Bereichen eine hydrophobe Oberflächencharakteristik bereitstellen zu können.

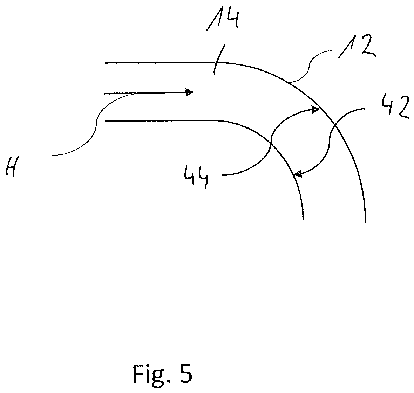

Ein weiteres Beispiel ist in Fig. 5 veranschaulicht. Die Fig. 5 zeigt einen Abschnitt des abgasführenden Rohrs 12, in welchem Abgas in der Abgas-Hauptströmungsrichtung H strömt. Der in Fig. 5 dargestellte Abschnitt ist ein gekrümmter Abschnitt des Rohrs 12 mit einem Krümmungsinnenbereich 42 und einem Krümmungsaußenbereich 44. Im Krümmungsinnenbereich 42 weist die Oberfläche des Rohrs 12 einen deutlich geringeren Krümmungsradius auf, als im Krümmungsaußenbereich 44. Bei der Durchströmung mit Abgas ist der Krümmungsinnenbereich 42 ein Bereich, in welchem einerseits ein Wärmeübertrag auf das Abgas bzw. das darin transportierte Reaktionsmittel nur mit vermindertem Ausmaß erfolgen wird und in welchem andererseits aufgrund der bevorzugten Strömung entlang des Krümmungsaußenbereichs 44 sich ansammelndes Reaktionsmittel nur schwer abgetragen wird. Daher ist es vorteilhaft, im Krümmungsinnenbereich 42 eine hydrophobe Charakteristik, beispielsweise durch Aufbringen einer hydrophoben Materialbeschichtung, vorzusehen, während vorteilhafterweise im Krümmungsaußenbereich 44, also demjenigen Bereich, in welchem das Reaktionsmittel sich bevorzugt niederschlagen wird und auch durch die Strömungscharakteristik des Abgases vergleichsweise stark abgetragen werden kann, durch das Bereitstellen einer hydrophilen Oberflächencharakteristik, also beispielsweise durch das Aufbringen von hydrophilem Material, die Verteilung und somit auch die Verdampfung bzw. Zersetzung des Reaktionsmittels auf die gesamte Oberfläche unterstützt werden können. In dem stromaufwärts des gekrümmten Abschnitts liegenden Längenbereich kann das Rohr 12 an seiner Innenseite, so wie in Fig. 1 angedeutet, mit hydrophiler Oberflächencharakteristik, also beispielsweise einer Materialbeschichtung mit hydrophilem Material, bereitgestellt sein.

Als hydrophiles Material kann Siliziumdioxid-Nanopartikelmaterial eingesetzt werden, beispielsweise das von der Firma TitanSave hergestellte bzw. vertriebene Material TS2229-1. Als hydrophobes Material kann beispielsweise organisches Silazan, beispielsweise das von der Firma Xpertco vertriebene Nanosolid™ Ultraprotect FX, eingesetzt werden. Auch so genanntes superhydrophobes und durch einen Sol-Gel-Prozess aufgebrachtes Beschichtungsmaterial kann zum Bereitstellen einer hydrophoben Oberflächencharakteristik, welche auch unter der allgemeinen Bezeichnung Lotos-Effekt bekannt ist, eingesetzt werden. Derartige hydrophile bzw. hydrophobe Materialbeschichtungen können beispielsweise auch in einem Sprühprozess auf die damit zu überziehenden Oberflächen der abgasführenden Komponenten aufgebracht werden.

## Patentansprüche

1. Abgasanlage für eine Brennkraftmaschine, insbesondere in einem Fahrzeug, umfassend einen Abgasströmungskanal (14), eine Reaktionsmittelabgabeanordnung (20) zur Abgabe von Reaktionsmittel (R) in den Abgasströmungskanal (14) und eine Katalysatoranordnung (16) stromabwärts der Reaktionsmittelabgabeanordnung (20), wobei bei wenigstens einer im Reaktionsmittelströmungsweg positionierten oder/und diesen begrenzenden abgasführenden Komponente (12, 22) wenigstens ein Teil einer Komponentenoberfläche durch hydrophiles Material (34) bereitgestellt ist, oder/und wobei bei wenigstens einer im Reaktionsmittelströmungsweg positionierten abgasführenden Komponente (12, 18, 22) wenigstens ein Teil einer Komponentenoberfläche durch hydrophobes Material (40) bereitgestellt ist, wobei wenigstens eine abgasführende Komponente (22) einen Mischer mit einer Mehrzahl von Leitschaufeln (26) umfasst, wobei wenigstens ein Teil einer bezüglich des Abgasstroms luvseitigen Oberfläche (28) wenigstens einer Leitschaufel (26) durch hydrophiles Material (34) bereitgestellt ist und wenigstens ein Teil einer bezüglich des Abgasstroms leeseitigen Oberfläche (30) der wenigstens einen Leitschaufel (26) durch hydrophobes Material (40) bereitgestellt ist, wobei jede Leitschaufel (26) bezüglich einer Abgas-Hauptströmungsrichtung (H) angestellt ist,
**dadurch gekennzeichnet, dass** jede Leitschaufel (26) eine Anströmkante (32) sowie eine bezüglich der Anströmkante (32) stromabwärts positionierte Abströmkante (33) aufweist, und
dass bei der wenigstens einen Leitschaufel (26) die Anströmkante (32) durch eine hydrophobe Materialbeschichtung bereitgestellt ist, wobei eine Flächennormale (N) der luvseitigen Oberfläche (28) der wenigstens einen Leitschaufel (26) mit durch eine hydrophobe Materialbeschichtung bereitgestellter Anströmkante (32) bezüglich einer Abgas-Hauptströmungsrichtung (H) einen Winkel von weniger als 45° aufweist, oder
dass bei der wenigstens einen Leitschaufel (26) die Anströmkante (32) durch eine hydrophile Materialbeschichtung bereitgestellt ist, wobei eine Flächennormale (N) der luvseitigen Oberfläche (28) der wenigstens einen Leitschaufel mit durch eine hydrophile Materialbeschichtung bereitgestellter Anströmkante (32) bezüglich einer Abgas-Hauptströmungsrichtung (H) einen Winkel von wenigsten 45° aufweist.

2. Abgasanlage nach Anspruch 1, **dadurch gekennzeichnet, dass** wenigstens eine abgasführende Komponente ein Rohr (12) umfasst, und dass wenigstens ein Teil einer Rohrinnenoberfläche durch hydrophiles Material (34) bereitgestellt ist.

3. Abgasanlage nach einem der vorangehenden Ansprüche, **dadurch gekennzeichnet, dass** wenigstens ein Teil einer bezüglich des Abgasstroms luvseitigen Oberfläche (28) jeder Leitschaufel (26) durch hydrophiles Material (34) bereitgestellt ist oder/und dass wenigstens ein Teil einer bezüglich des Abgasstroms leeseitigen Oberfläche (30) jeder Leitschaufel (26) durch hydrophobes Material (40) bereitgestellt ist.

4. Abgasanlage nach einem der Ansprüche 1 bis 3, **dadurch gekennzeichnet, dass** bei wenigstens einer, vorzugsweise jeder Leitschaufel (26) wenigstens ein Teil der Abströmkante (33), vorzugsweise die gesamte Abströmkante (33), durch hydrophobes Material (40) bereitgestellt ist.

5. Abgasanlage nach einem der Ansprüche 1 bis 4, **dadurch gekennzeichnet, dass** bei jeder Leitschaufel (26) die Anströmkante (32) durch eine hydrophobe Materialbeschichtung bereitgestellt ist.

6. Abgasanlage nach einem der Ansprüche 1 bis 4, **dadurch gekennzeichnet, dass** bei jeder Leitschaufel (26) die Anströmkante (32) durch eine hydrophile Materialbeschichtung bereitgestellt ist.

7. Abgasanlage nach einem der vorangehenden Ansprüche, **dadurch gekennzeichnet, dass** in einem Krümmungsbereich des Abgasströmungskanals (14) eine den Abgasströmungskanal (14) begrenzende Oberfläche einer abgasführenden Komponente (12) in einem Krümmungsinnenbereich (42) durch hydrophobes Material bereitgestellt ist, oder/und dass in einem Krümmungsbereich des Abgasströmungskanals (14) eine den Abgasströmungskanal (14) begrenzende Oberfläche einer abgasführenden Komponente (12) in einem Krümmungsaußenbereich (44) durch hydrophiles Material bereitgestellt ist.

8. Abgasanlage nach Anspruch 7, **dadurch gekennzeichnet, dass** das hydrophile Material durch eine Materialbeschichtung (36) bereitgestellt ist, oder/und dass das hydrophobe Material (40) durch eine Materialbeschichtung (38) bereitgestellt ist.

9. Abgasanlage nach einem der vorangehenden Ansprüche, **dadurch gekennzeichnet, dass** die Reaktionsmittelabgabeanordnung (20) im Bereich eines Reaktionsmittelabgabestutzens (18) angeordnet ist, und dass eine Innenoberfläche des Reaktionsmittelabgabestutzens (18) wenigstens bereichsweise durch hydrophobes Material (40) bereitgestellt ist.

10. Abgasanlage nach einem der vorangehenden Ansprüche, dass in wenigstens einem Bereich einer den Abgasströmungskanal (14) begrenzenden Oberfläche mit in Richtung einer Abgas-Hauptströmungsrichtung (H) geneigter oder dazu paralleler und gleich gerichteter Flächennormale (N) die Oberfläche mit hydrophobem Material (40) bereitgestellt ist.

11. Abgasanlage nach Anspruch 9 oder 10, **dadurch gekennzeichnet, dass** das hydrophobe Material (40) durch eine Materialbeschichtung (38) bereitgestellt ist.

## Claims

1. Exhaust system for an internal combustion engine, especially in a vehicle, comprising an exhaust gas flow duct (14), a reactant release device (20) for the release of reactant (R) into the exhaust gas flow duct (14) and a catalytic converter device (16) downstream of the reactant release device (20), wherein at least one part of a component surface is provided by a hydrophilic material (34) in at least one exhaust gas-carrying component (12, 22) positioned in the reactant flow path or/and defining this reactant flow path, or/and wherein at least one part of a component surface is provided by a hydrophobic material (40) in at least one exhaust gas-carrying component (12, 18, 22) positioned in the reactant flow path, wherein at least one exhaust gas-carrying component (22) comprises a mixer with a plurality of guide blades (26), wherein at least one part of a surface (28) of at least one guide blade (26), which surface is on the windward side in relation to the exhaust gas stream, is provided by a hydrophilic material (34), and wherein at least one part of a surface (30) of the at least one each guide blade (26), which surface is on the leeward side in relation to the exhaust gas stream, is provided by a hydrophobic material (40), wherein each guide blade (26) is set at an angle in relation to an exhaust gas main flow direction (H),
**characterized in that**
each guide blade (26) has a leading edge (32) as well as a trailing edge (33) which is positioned downstream in relation to the leading edge (32), and
that in the at least one guide blade (26) the trailing edge (32) is provided by a hydrophobic material coating, wherein a surface normal (N) of a windward-side surface (28) of the at least one guide blade (26) with the leading edge (32) provided by a hydrophobic material coating has an angle of less than 45° in relation to an exhaust gas main flow direction (H),
or
that in the at least one guide blade (26) the trailing edge (32) is provided by a hydrophilic material coating, wherein a surface normal (N) of the windward-side surface (28) of the at least one guide blade with the leading edge (32) provided by a hydrophilic material coating has an angle of at least 45° in relation to an exhaust gas main flow direction (H).

2. Exhaust system in accordance with claim 1, **characterized in that** at least one exhaust gas-carrying component comprises a pipe (12), and that at least one part of a pipe inner surface is provided by a hydrophilic material (34).

3. Exhaust system in accordance with one of the preceding claims, **characterized in that** at least part of a surface (28) of each guide blade (26) which surface is on the windward side in relation to the exhaust gas stream, is provided by a hydrophilic material (34) or/and that at least part of a surface (30) of each guide blade (26) which surface is on the leeward side in relation to the exhaust gas stream, is provided by a hydrophobic material (40).

4. Exhaust system in accordance with one of claims 1 to 3, **characterized in that** in at least one, preferably each guide blade (26) at least one part of the trailing edge (33), preferably the entire trailing edge (33) is provided by a hydrophobic material (40).

5. Exhaust system in accordance with one of claims 1 to 4, **characterized in that** in each guide blade (26) the leading edge (32) is provided by a hydrophobic material coating.

6. Exhaust system in accordance with one of claims 1 to 4, **characterized in that** in each guide blade (26) the leading edge (32) is provided by a hydrophilic material coating.

7. Exhaust system in accordance with one of the preceding claims, **characterized in that** in a curved area of the exhaust gas flow duct (14), a surface of an exhaust gas-carrying component (12), which surface defines the exhaust gas flow duct (14), is provided by a hydrophobic material in a curved inner area (42), or/and that in a curved area of the exhaust gas flow duct (14), a surface of an exhaust gas-carrying component (12), which surface defines the exhaust gas flow duct (14), is provided by a hydrophilic material in a curved outer area (44).

8. Exhaust system in accordance with claim 7, **characterized in that** the hydrophilic material is provided by a material coating (36) or/ and that the hydrophobic material (40) is provided by a material coating (38).

9. Exhaust system in accordance with one of the preceding claims, **characterized in that** the reactant release device (20) is arranged in the area of a reactant release pipe connection (18), and that an inner surface of the reactant release pipe connection (18) is provided by a hydrophobic material (40) in at least some areas.

10. Exhaust system in accordance with one of the preceding claims, **characterized in that** the surface is provided with a hydrophobic material (40) in at least one area of a surface which defines the exhaust gas flow duct (14) with a surface normal (N) sloped in the direction of an exhaust gas main flow direction (H) or parallel thereto and aligned therewith.

11. Exhaust system in accordance with claim 9 or 10, **characterized in that** the hydrophobic material (40) is provided by a material coating (38).

## Revendications

1. Système d'échappement pour un moteur à combustion interne, en particulier dans un véhicule, comprenant un conduit d'écoulement de gaz d'échappement (14), un dispositif de libération de réactif (20) pour la libération d'un réactif (R) dans le conduit d'écoulement de gaz d'échappement (14) et un dispositif de convertisseur catalytique (16) en aval du dispositif de libération de réactif (20), dans lequel au moins une partie d'une surface de composant est prévue par un matériau hydrophile (34) dans au moins un composant de transport de gaz d'échappement (12, 22) positionné dans le trajet d'écoulement de réactif ou/et définissant ce trajet d'écoulement de réactif, ou/et dans lequel au moins une partie d'une surface de composant est prévue par un matériau hydrophobe (40) dans au moins un composant de transport de gaz d'échappement (12, 18, 22) positionné dans le trajet d'écoulement de réactif, dans lequel au moins un composant de transport de gaz d'échappement (22) comprend un mélangeur avec une pluralité de pales de guidage (26), dans lequel au moins une partie d'une surface (28) d'au moins une pale de guidage (26), laquelle surface est sur le côté au vent par rapport au flux de gaz d'échappement, est prévue par un matériau hydrophile (34), et dans lequel au moins une partie d'une surface (30) de ladite au moins une lame de guidage (26), laquelle surface est sur le côté sous le vent par rapport au flux de gaz d'échappement, est prévue par un matériau hydrophobe (40), dans lequel chaque lame de guidage (26) est placée à un angle par rapport à une direction d'écoulement principal de gaz d'échappement (H),
**caractérisé en ce que**
chaque lame de guidage (26) a un bord d'attaque (32) ainsi qu'un bord de fuite (33) qui est positionné en aval par rapport au bord d'attaque (32), et
**en ce que**, dans ladite au moins une lame de guidage (26), le bord d'attaque (32) est prévu par un revêtement en matériau hydrophobe, dans lequel une normale de surface (N) de la surface côté vent (28) de ladite au moins une lame de guidage (26) avec le bord d'attaque (32) prévu par un revêtement en matériau hydrophobe a un angle inférieur à 45° par rapport à une direction d'écoulement principal de gaz d'échappement (H),
ou
**que** dans ladite au moins une lame de guidage (26), le bord d'attaque (32) est prévu par un revêtement en matériau hydrophile, dans lequel une normale de surface (N) de la surface côté vent (28) de ladite au moins une lame de guidage avec le bord d'attaque (32) prévu par un revêtement en matériau hydrophile a un angle d'au moins 45° par rapport à une direction d'écoulement principal de gaz d'échappement (H).

2. Système d'échappement selon la revendication 1, **caractérisé en ce qu'**au moins un composant de transport de gaz d'échappement comprend un tuyau (12), et **en ce qu'**au moins une partie d'une surface intérieure de tuyau est prévue par un matériau hydrophile (34).

3. Système d'échappement selon l'une des revendications précédentes, **caractérisé en ce qu'**au moins une partie d'une surface (28) de chaque lame de guidage (26), laquelle surface se trouve du côté au vent par rapport au flux de gaz d'échappement, est prévue par un matériau hydrophile (34) ou/et **en ce qu'**au moins une partie d'une surface (30) de chaque lame de guidage (26), laquelle surface se trouve du côté sous le vent par rapport au flux de gaz d'échappement, est prévue par un matériau hydrophobe (40).

4. Système d'échappement selon l'une des revendications 1 à 3, **caractérisé en ce que** dans au moins une, de préférence chaque lame de guidage (26), au moins une partie du bord de fuite (33), de préférence la totalité du bord de fuite (33), est prévue par un matériau hydrophobe (40).

5. Système d'échappement selon l'une des revendications 1 à 4, **caractérisé en ce que** dans chaque lame de guidage (26), le bord d'attaque (32) est prévu par un revêtement en matériau hydrophobe.

6. Système d'échappement selon l'une des revendications 1 à 4, **caractérisé en ce que** dans chaque lame de guidage (26), le bord d'attaque (32) est prévu par un revêtement en matériau hydrophile.

7. Système d'échappement selon l'une des revendications précédentes, **caractérisé en ce que** dans une zone incurvée du conduit d'écoulement des gaz d'échappement (14), une surface d'un composant de transport des gaz d'échappement (12), laquelle surface définit le conduit d'écoulement des gaz d'échappement (14), est prévue par un matériau hydrophobe dans une zone incurvée intérieure (42), ou/et **en ce que** dans une zone incurvée du conduit d'écoulement des gaz d'échappement (14), une surface d'un composant de transport des gaz d'échappement (12), laquelle surface définit le conduit d'écoulement des gaz d'échappement (14), est prévue par un matériau hydrophile dans une zone incurvée extérieure (44).

8. Système d'échappement selon la revendication 7, **caractérisé en ce que** le matériau hydrophile est prévu par un revêtement de matériau (36) ou/et **en ce que** le matériau hydrophobe (40) est prévu par un revêtement de matériau (38).

9. Système d'échappement selon l'une des revendications précédentes, **caractérisé en ce que** le dispositif de libération de réactif (20) est disposé dans la zone d'un raccord de conduite de libération de réactif (18), et **en ce qu'**une surface intérieure du raccord de conduite de libération de réactif (18) est prévue par un matériau hydrophobe (40) dans au moins certaines zones.

10. Système d'échappement selon l'une des revendications précédentes, **caractérisé en ce que** la surface est prévue avec un matériau hydrophobe (40) dans au moins une zone d'une surface qui définit le conduit d'écoulement des gaz d'échappement (14) avec une normale de surface (N) inclinée dans la direction d'une direction principale d'écoulement des gaz d'échappement (H) ou parallèle à celle-ci et alignée avec celle-ci.

11. Système d'échappement selon la revendication 9 ou 10, **caractérisé en ce que** le matériau hydrophobe (40) est prévu par un revêtement de matériau (38).
